(19) Europäisches Patentamt / European Patent Office / Office européen des brevets

(11) **EP 2 266 397 B1**

(12) **EUROPÄISCHE PATENTSCHRIFT**

(45) Veröffentlichungstag und Bekanntmachung des Hinweises auf die Patenterteilung:
**18.01.2012 Patentblatt 2012/03**

(21) Anmeldenummer: **10166262.5**

(22) Anmeldetag: **17.06.2010**

(51) Int Cl.:
***A01N 37/20*** *(2006.01)* ***A01N 37/26*** *(2006.01)*
***A01N 43/653*** *(2006.01)* ***B27K 3/50*** *(2006.01)*
***A01P 3/00*** *(2006.01)* ***A01N 25/30*** *(2006.01)*

(54) **Amidoalkylaminhaltige Azol-Zusammensetzungen für den Schutz holzhaltiger technischer Materialien**

Azole compounds containing amidoalkylamine to protect wood-containing technical materials

Compositions d'azole contenant de l'amidoalkylamine pour la protection de matériaux techniques contenant du bois

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **18.06.2009 EP 09163144**

(43) Veröffentlichungstag der Anmeldung:
**29.12.2010 Patentblatt 2010/52**

(73) Patentinhaber: **LANXESS Deutschland GmbH**
**51369 Leverkusen (DE)**

(72) Erfinder:
- **Koop, Bernd**
  **50668 Köln (DE)**
- **Kugler, Martin**
  **42799 Leichlingen (DE)**
- **Böttcher, Andreas**
  **50859 Köln (DE)**
- **Kaulen, Johannes**
  **51519 Odenthal (DE)**

(56) Entgegenhaltungen:
**WO-A1-01/95720 WO-A1-93/02557**
**WO-A1-95/17817 WO-A1-03/065807**
**WO-A2-2008/068214 DE-A1- 19 953 274**

- **MUZYCZKO T M ET AL: "Fatty amidoamine derivatives:N,N-dimethyl-N-(3-alkylamidopr opyl)amines and their salts" JOURNAL OF THE AMERICAN OIL CHEMISTS' SOCIETY, SPRINGER, BERLIN, DE, Bd. 45, Nr. 11, 1. November 1968 (1968-11-01), Seiten 720-725, XP009090537 ISSN: 0003-021X**
- **TOMLIN C D S (ED): "TEBUCONAZOLE - MIXTURES", E-PESTICIDE MANUAL, XX, XX, vol. ED. 13, 1 January 2003 (2003-01-01), pages 1-4, XP002436353,**
- **H Schrage ET AL: "Tebuconazole - ein neus Triazol-Fungizid für den Holzschutz", Werkstoffe und Korrosion, 1 March 1994 (1994-03-01), pages 199-200, XP55003449, DOI: 10.1002/maco. 19940450314 Retrieved from the Internet: URL: http://onlinelibrary.wiley.com/store/1 0.1002/maco.19940450314/asset/19940450314_ ftp.pdf?v=1&t=gqf6vitq&s=ad11087aa86bb0157 cb53b2402fc43e640f66e0e [retrieved on 2011-07-22]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft die Verwendung von amidoalkylaminhaltigen Azol-Zusammensetzungen zum Schutz von technischen Materialien, entsprechende Zusammensetzungen, technische Materialien sowie ein Verfahren zum Schutz technischer Materialien.

Wirkstoffe für den Holzschutz, insbesondere gegen Pilze, stammen aus einer Vielzahl von Verbindungsklassen. Besonders wichtig sind Azole, insbesondere Triazole. Einzelwirkstoffe decken jedoch nicht das ganze Spektrum gegen die schädigenden Pilze ab, so dass häufig Kombinationen von Wirkstoffen eingesetzt werden müssen, oder die Wirkstoffe entsprechend hoch dosiert werden müssen.

In DE-A-19953274 werden für den Einsatz im Pflanzenschutz zum Zwecke der Emulsionsstabilität wasserlösliche sowie öllösliche Pestizide mit speziellen Fettsäureamidoaminen versetzt. Diese bewirken eine höhere physikalische Lagerstabilität, wobei damit einhergehend auch eine höhere Aktivität (Adjuvanseffekt) beschrieben wird. Letzterer ist aber verwunderlich, da instabile Wirkstoffpräparationen in der Regel gar nicht optimal wirken können, schon weil ausgefallene oder nicht mehr feinverteilte Wirkstoffe nun einmal eine geringe Wirkung in der Anwendung entfalten. Als Wirkverstärkung durch das Additiv selbst ist aber DE-19953274 nicht zu verstehen.

In WO 93/02557 kann die Wirkung von Azolen durch den Zusatz von quartären Ammoniumverbindungen oder tertiären Aminsalzen verbessert werden. Diese Verbindungen haben jedoch bereits selbst biozid aktiv zu sein - also Wirkstoffe (siehe S. 5, Zeile 23 und Zeilen 32 - 35). Entsprechend wirken sie kausal dadurch als Biozide. Somit sind diese Zusätze als klassische Wirkstoffe zu sehen und ergeben zusammen mit anderen klassische Wirkstoffmischungen. Nicht selten sind mit weiteren Wirkstoffen aber auch Nachteile verbunden, die es für bestimmte Anwendungen zu vermeiden gilt. Eine Wirkverstärkung durch Zusätze, die selbst keine Wirkstoffe sind, wird jedoch nicht beschrieben.

Zur Behebung dieser Wirkstoffschwächen wurden für den Materialschutz, insbesondere für den Holzschutz bereits verschiedene Möglichkeiten der Wirkverstärkung untersucht.

US6231651 beschreibt die Verwendung von phenolischen Antioxidantien zur Wirkverstärkung von Azolen für den Holzschutz. Die Antioxidantien wie BHT werden jedoch in einem sehr großen Überschuss von bis zu ca. 450:1 (im Verhältnis zum Azol) eingesetzt. Dies ist von großem Nachteil, da die Wirkverstärkung durch die hohen Additivmengen verteuert wird.

In WO00713 wird die Verwendung von Aminoxiden zur Wirkverstärkung von Azolen für den Holzschutz beschrieben. Die Wasserlöslichkeit der Aminoxide führt jedoch dazu, dass die Aminoxide leicht mit Wasser aus dem behandelten Holz ausgewaschen werden können, womit auch die Wirkverstärkung wieder verloren geht.

Für Mikroorganismen, insbesondere phytopatogene Pilze (also ausschließlich auf Pflanzen vorkommende Pilze), wurden in WO95/1781 u.a. für einige Azole wie dem Triadimefon bestimmte tertiäre bzw. quartäre Amine in Kombination mit Chelatisierungsmitteln als Wirkverstärker beschrieben. Auch in WO 01/95720 finden sich Wirkverstärker für Pestizide für den Einsatz im Bereich Pflanzenschutz. Die für den Pflanzenschutz beschriebenen fungiziden Wirkungen mit oder ohne Wirkverstärkung sind jedoch nicht automatisch bspw. auf holzzerstörende Basidiomyceten zu übertragen, zumal der Schutz von technischen Materialien grundlegend andere Anforderungen an die Wirkstoffe bzgl. Stabilität, Auswaschverhalten, Farbigkeit und die Kompatibilität zu den prinzipiell unterschiedlichen Formulierhilfsmitteln als im Pflanzenschutz stellt.

Aufgabe der vorliegenden Erfindung war es, Wirkverstärker für Azole für den Schutz von technischen Materialien ausgewählt aus der Gruppe Holz, Holzwerkstoff oder Holz-Plastik-Verbundstoff vor Befall und/oder Zerstörung durch Mikroorganismen, insbesondere holzzerstörende Basidiomyceten, vorzugsweise Holobasidiomyceten bereitzustellen.

Überraschenderweise wurde daher eine Verwendung von Zusammensetzungen gefunden, enthaltend

a) wenigstens ein Azol und

b) wenigstens ein Amidoalkylamin der Formel (I), deren Salze und/oder Säureadditionsverbindungen

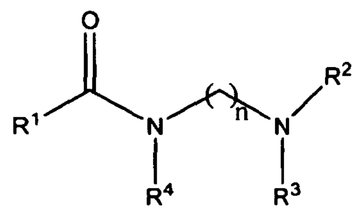

(I)

worin $R^1$ für gegebenenfalls substituiertes $C_1$-$C_{40}$-Alkyl oder $C_2$-$C_{40}$-Alkenyl, $R^2$, $R^3$ und $R^4$ unabhängig voneinander

für Wasserstoff oder $C_1$-$C_8$-Alkyl
und n für eine ganze Zahl von 1 bis 6 steht, zum Schutz von Holz, Holzwerkstoffen oder Holz-Plastik-Verbundstoffen vor Befall und/oder Zerstörung durch Mikroorganismen.

Die verwendungsgemäße Zusammensetzung wird vorzugsweise als mikrobizides Mittel, insbesondere als fungizides Mittel eingesetzt.

Als Azole werden Triazole ausgewählt aus der Gruppe bestehend aus Azaconazol, Bitertanol, Bromuconazol, Cyproconazol, Diclobutrazol, Difenoconazol, Diniconazol, Epoxyconazol, Etaconazol, Fenbuconazol, Fluquinconazol, Flusilazol, Flutriafol, Furconazol, Hexaconazol, Imibenconazol, Ipconazol, Myclobutanil, Metconazol, Penconazol, Propiconazol, Prothioconazol, Simeconazol, Tebuconazol, Tetraconazol, Triadimefon, Triadimenol, Triticonazol und Uniconazol sowie deren Metallsalze und Säureaddukte.

Bevorzugt wird eine Zusammensetzung verwendungsgemäß eingesetzt, die wenigstens ein Azol ausgewählt aus der Gruppe Tebuconazol, Propiconazol und Cyproconazol enthält und ggf. ein weiteres Azol ausgewählt aus der Gruppe Triadimenol und Triadimefon enthält.

Besonders bevorzugt sind dabei die folgenden Azol Kombinationen: Tebuconazol und Triadimefon, Tebuconazol und Propiconazol, Tebuconazol und Cyproconazol sowie Propiconazol und Cyproconazol.

Eine bevorzugte verwendungsgemäße Zusammensetzung enthält wenigstens eine Verbindung der Formel (I), deren Salze und/oder Säureadditionsprodukte, worin bevorzugt
$R^1$ für $C_2$-$C_{36}$-Alkyl oder $C_2$-$C_{36}$-Alkenyl, $R^2$, $R^3$ und $R^4$ jeweils unabhängig voneinander für Wasserstoff oder $C_1$-$C_4$-Alkyl und
n für eine Zahl von 1 bis 4 steht.

Ganz besonders bevorzugt enthält die verwendungsgemäße Zusammensetzung wenigstens eine Verbindung der Formel (I), deren Salze und/oder Säureadditionsprodukte, worin
$R^1$ für $C_5$-$C_{19}$-Alkyl oder $C_5$-$C_{19}$-Alkenyl steht,
$R^2$ und $R^3$ jeweils für Methyl stehen,
$R^4$ Wasserstoff bedeutet und
n für 3 steht.

Die Alkenylreste in der Bedeutung von $R^1$ können eine oder mehrere Doppelbindungen enthalten.

Die Verbindungen der Formel (I) können einzeln oder in Mischungen eingesetzt werden. Besonders bevorzugt sind solche Mischungen, worin die Verbindungen der Formel (I) unterschiedliche Reste $R^1$ besitzen. Besonders bevorzugt ist eine Mischung von Verbindungen der Formel (I), enthaltend

5 - 10 Gew.% (I) mit $R^1$=Alkylrest der Octansäure, also $C_7H_{15}$

5 - 9 Gew.% (I) mit $R^1$=Alkylrest der Decansäure, also $C_9H_{19}$

41 - 53 Gew.% mit $R^1$=Alkylrest der Dodecansäure

16 - 21 Gew.% mit $R^1$=Alkylrest der Tetradecansäure

8 - 12 Gew.% (I) mit $R^1$=Alkylrest der Hexadecansäure

5 - 10 Gew.% (I) mit $R^1$=Alkenylrest der Ölsäure,

wobei die übrigen Reste $R^2$ bis $R^4$ und n der Formel (I) die obige Bedeutung besitzen. Besonders bevorzugt ist n = 3, $R^2$ und $R^3$ jeweils Methyl und $R^4$ Wasserstoff.

Auch weitere Anteile an Verbindungen (I) mit $R^1$ = Reste anderer Fettsäuren können enthalten sein.

Als Beispiel sind zu nennen 0 bis 5 Gew.% (I) mit $R^1$=Alkenylrest der Linolsäure.

Als Beispiel für eine Verbindung der Formel (I), deren Rest $R^1$ auf Kokosöl der obigen $R^1$ Mischung beruht, ist das Produkt Adsee® C80W der Firma Akzo Nobel.

Das eingesetzte Azol der Komponente a) wird vorzugsweise zur Verbindung der Komponente b) im Gewichtsverhältnis von 50 : 1 bis 1 : 50, insbesondere von 10 : 1 bis 1 : 10, besonders bevorzugt von 5 : 1 bis 1 : 5 eingesetzt. Die Komponente b) wird vorzugsweise im Verhältnis von 0,5 : 1 bis 8 : 1, insbesondere von 2 : 1 bis 5 : 1 zur Komponente a) eingesetzt.

Die erfindungsgemäß eingesetzten Zusammensetzungen können fest oder flüssig zum Einsatz kommen. Dabei kommen Formulierungen wie Lösungen, Emulsionen, Suspensionen, Pulver, Granulate, Pasten, Aerosole sowie Feinstverkapselungen in polymeren Stoffen in Frage.

Bevorzugt kommen solche Zusammensetzungen verwendungsgemäß zum Einsatz, die Wasser und/oder ein

organisches Lösungsmittel enthalten. Im Falle der Benutzung von Wasser als Streckmittel können auch geeignete, d.h. mit Wasser unter Bildung einer Phase mischbare, organische Lösungsmittel als Hilfslösungsmittel verwendet werden.

Als organische Lösungsmittel kommen beispielsweise Aromaten, wie Xylol, Toluol oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen (Testbenzin, Shellsol® D60 der Fa. Shell Chemical), einwertige Alkohole wie bspw. Ethanol, Isopropanol und Butanol, mehrwertige Alkohole wie bspw. Glycerin, Pentaerythritol, Polyvinylalkohol (z.B. Mowiol® der Fa. Kuraray), Glykole wie bspw. Ethylenglykol und Propylenglykol, Oligoglykole und Polyglykole, Ether von Oligoglykolen wie bspw. Dipropylenglykol-Monomethylether (z.B. Dowanol® TPM der Fa. Dow), Ether und Ester von Alkoholen wie 2,2,4-Trimethyl-1,3-pentandiolmono(2-methylpropionat) (enstpricht Texanol® der Fa. Eastman), Ketone, wie Aceton, Methylethylketon, Methylisobutylketon oder Cyclohexanon, insbesondere stark polare aprotische Lösungsmittel, wie Dimethylformamid und Dimethylsulfoxid, sowie z.B. totalveretherte Glykole, Oligoglykole und Polyglykole wie bspw. Ethylenglykoldibutylether, veretherte Polyole und veresterte Polyole, Ester von ein- sowie mehrwertigen Carbonsäuren, z.B. Adipinsäuredüsobutylester, Maleinsäuredüsobutylester (z.B. Rhodiasolv® DIB) in Frage.

Die genannten organischen Lösungsmittel können aber auch vorzugsweise ohne oder zumindest mit wenig Wasser zum Einsatz kommen. Bevorzugt enthält die Zusammensetzung zusätzlich zu den Komponenten a) und b) ein Lösungsmittel, insbesondere ein Lösungsmittel, das zu mehr als 95 Gew.-%, vorzugweise mehr als 98-Gew.-% aus wenigstens einem organischen Lösungsmittel besteht. Bevorzugt ist insbesondere ein polares aprotisches Lösungsmittel, wie Dimethylformamid und Dimethylsulfoxid, sowie z.B. totalveretherte Glykole, Oligoglykole und Polyglykole, veretherte Polyole und veresterte Polyole, Ester von ein- sowie mehrwertigen Carbonsäuren, z.B. Adipinsäurediisobutylester, Maleinsäurediisobutylester (z.B. Rhodiasolv® DIB).

Weiterhin kann die erfindungsgemäße Zusammensetzung als weitere Inhaltsstoffe Haftmittel wie Carboxymethylcellulose, natürliche und synthetische pulverige, körnige oder latexförmige Polymere, wie Gummiarabicum, Polyvinylalkohol, Polyvinylacetat enthalten, sowie natürliche Phospholipide, wie Kephaline und Lecithine, und synthetische Phospholipide, sowie mineralische und vegetabile Öle, sowie Emulgier- und/oder schaumerzeugende Mittel wie beispielsweise nichtionische und anionische Emulgatoren, wie Polyoxyethylen-Fettsäureester (z.B. Ricinusölethoxylat), Polyoxyethylen-Fettalkoholether, Alkylarylpolyglycolether, Alkylsulfonate, Alkylsulfate, Arylsulfonate sowie Eiweißhydrolysate. Als Dispergiermittel kommen in Frage: z.B. Ligninsulfitablaugungen und Methylcellulose.

Bevorzugt enthält die eingesetzte Zusammensetzung neben den oben genannten Komponenten a) und b) wenigstens ein polares organisches Lösungsmittel, insbesondere 2,2,4-Trimethyl-1,3-pentandiolmono-(2-methylpropionat), wie Texanol®, und wenigstens einen Emulgator, insbesondere ein Polyoxyethylen-Fettsäureester, vorzugsweise Ricinusölethoxylat und ggf Wasser.

Die eingesetzte Zusammensetzung enthält vorzugsweise Chelatisierungsmittel in einer Menge von weniger als 0,01 mol, vorzugsweise weniger als 0,001 mol pro mol eingesetzter Verbindung der Formel (I).

Die Zusammensetzungen können weiterhin Farbstoffe wie anorganische Pigmente, z.B. Eisenoxid, Titanoxid, Ferrocyanblau, Kupferoxid und organische Farbstoffe, wie Alizarin-, Azo- und Metallphthalocyaninfarbstoffe enthalten.

Die eingesetzte Zusammensetzung enthält im allgemeinen vorzugsweise 0,1 bis 95 Gewichtsprozent der Komponenten a) und b), vorzugsweise 0,5 bis 90 Gew.-%.

Die verwendungsgemäßen Zusammensetzungen können auch noch weitere Wirkstoffe bspw. Fungizide, Bakterizide und/oder Insektizide enthalten, um so z.B. das Wirkungsspektrum zu verbreitern oder Resistenzentwicklungen vorzubeugen. In vielen Fällen erhält man dabei synergistische Effekte, d.h. die Wirksamkeit kombinierter Wirkstoffe ist größer als die Wirksamkeit der Einzelkomponenten.

Besonders günstige Mischungspartner sind z.B. die folgenden Verbindungen:

Pyridine und Pyrimidine wie:

Ancymidol, Buthiobate, Fenarimol, Mepanipyrin, Nuarimol, Pyroxyfur, Triamirol ;

Succinat-Dehydrogenase Inhibitoren wie:

Benodanil, Bixafen, Boscalid, Carboxim, Carboximsulfoxid, Cyclafluramid, Fenfuram, Flutanil, Furametpyr, Furcarbanil, Furmecyclox, Mebenil, Mepronil, Methfuroxam, Metsulfovax, Nicobifen, Pyrocarbolid, Oxycarboxin, Shirlan, Seedvax;

Naphthalin-Derivate wie:

Terbinafine, Naftifine, Butenafine, 3-Chloro-7-(2-aza-2,7,7-trimethyl-oct-3-en-5-in);

Sulfenamide wie:

Dichlofluanid, Tolylfluanid, Folpet, Fluorfolpet; Captan, Captofol;

Benzimidazole wie:

Carbendazim, Benomyl, Fuberidazole, Thiabendazole oder deren Salze;

Morpholinderivate wie:

Aldimorph, Dimethomorph, Dodemorph, Falimorph, Fenpropidin Fenpropimorph, Tridemorph, Trimorphamid und ihre arylsulfonsauren Salze, wie z.B. p-Toluolsulfonsäure und p-Dodecylphenylsulfonsäure;

Benzthiazole wie:

2-Mercaptobenzothiazol;

Benzthiophendioxide wie:

Benzo[b]thiophen-S,S-dioxid-carbonsäurecyclohexylamid;

Benzamide wie:

2,6-Dichloro-N-(4-trifluoromethylbenzyl)-benzamide, Tecloftalam;

Borverbindungen wie:

Borsäure, Borsäureester, Borax;

Formaldehyd und formaldehydabspaltende Verbindungen wie:

Benzylalkoholmono-(poly)-hemiformal, n-Butanol-hemiformal, Dazomet, Ethylenglycol-hemiformal, Hexa-hydro-S-triazine, Hexamethylentetramin, N-Hydroxymethyl-N'-methylthioharnstoff, N-Methylolchloracetamid, Oxazolidine, Paraformaldehyd, Taurolin, Tetrahydro-1,3-oxazin, N-(2-Hydroxypropyl)-amin-methanol, Tetramethylol-acetylendiharnstoff;

Isothiazolinone wie:

N-Methylisothiazolin-3-on, 5-Chlor-N-methylisothiazolin-3-on, 4,5-Dichloro-N-octylisothiazolin-3-on, 5-Chlor-N-octylisothiazolinon, N-Octyl-isothiazolin-3-on, 4,5-Trimethylen-isothiazolinone, 4,5-Benzisothiazolinone;

Aldehyde wie:

Zimtaldehyd, Formaldehyd, Glutardialdehyd, β-Bromzimtaldehyd, o-Phthaldialdehyd;

Thiocyanatc wie:

Thiocyanatomethylthiobenzothiazol, Methylenbisthiocyanat;

quartäre Ammoniumverbindungen und Guanidine wie:

Benzalkoniumchlorid, Benzyldimethyltetradecylammoniumchlorid, Benzyldimethyldodecylammoniumchlorid, Dichlorbenzyl-dimethyl-alkyl-ammoniumchlorid, Didecyldimethylammoniumchlorid, Dioctyl-dimethyl-ammoniumchlorid, N-Hexadecyl-trimethylammoniumchlorid, 1-Hexadecyl-pyridinium-chlorid, Iminoctadine-tris(albesilate);

Iodderivate wie:

Diiodmethyl-p-tolylsulfon, 3-Iod-2-propinyl-alkohol, 4-Chlorphenyl-3-iodpropargylformal, 3-Brom-2,3-diiod-2-propenylethylcarbamat, 2,3,3-Triiodallylalkohol, 3-Brom-2,3-diiod-2-propenylalkohol, 3-Iod-2-propinyl-n-butylcarbamat, 3-Iod-2-propinyl-n-hexylcarbamat, 3-Iod-2-propinyl-cyclohexyl-carbamat, 3-Iod-2-propinyl-phenylcarbamat;

Phenole wie:

Tribromphenol, Tetrachlorphenol, 3-Methyl-4-chlorphenol, 3,5-Dimethyl-4-chlorphenol, Dichlorphen, 2-Benzyl-4-chlorphenol, Triclosan, Diclosan, Hexachlorophen, p-Hydroxybenzoesäureester, o-Phenylphenol, m-Phenylphenol, p-Phenylphenol, 4-(2-tert.-Butyl-4-methyl-phenoxy)-phenol, 4-(2-Isopropyl-4-methyl-phenoxy)-phenol, 4-(2,4-Dimethyl-phenoxy)-phenol und deren Alkali- und Erdalkalimetallsalze;

Mikrobizide mit aktivierter Halogengruppe wie:

Bronopol, Bronidox, 2-Brom-2-nitro-1,3-propandiol, 2-Brom-4'-hydroxy-acetophenon, 1-Brom-3-chlor-4,4,5,5-tetramethyl-2-imidazoldinone, β-Brom-β-nitrostyrol, Chloracetamid, Chloramin T, 1,3-Dibrom-4,4,5,5-tetrametyl-2-imidazoldinone, Dichloramin T, 3,4-Dichlor-(3H)-1,2-dithiol-3-on, 2,2-Dibrom-3-nitril-propionamid, 1,2-Dibrom-2,4-dicyanobutan, Halane, Halazone, Mucochlorsäure, Phenyl-(2-chlor-cyan-vinyl)sulfon, Phenyl-(1,2-dichlor-2-cyanvinyl)sulfon, Trichlorisocyanursäure;

Pyridine wie:

1-Hydroxy-2-pyridinthion (und ihre Cu-, Na-, Fe-, M n-, Zn-Salze), Tetrachlor-4-methylsulfonylpyridin, Pyrimethanol, Mepanipyrim, Dipyrithion, 1-Hydroxy-4-methyl-6-(2,4,4-trimethylpentyl)-2(1H)-pyridin;

Methoxyacrylate oder ähnliches wie:

Azoxystrobin, Dimoxystrobin, Fluoxastrobin, Kresoxim-methyl, Metominostrobin, Orysastrobin, Picoxystrobin, Pyraclostrobin, Trifloxystrobin;

Metallseifen wie:

Salze der Metalle Zinn, Kupfer und Zink mit höheren Fett-, Harz-, Naphthensäuren und Phosphorsäure wie z.B. Zinn-, Kupfer-, Zinknaphtenat, -octoat, 2-ethylhexanoat, -oleat, -phosphat, -benzoat;

Metallsalze wie:

Salze der Metalle Zinn, Kupfer, Zink, sowie auch Chromate und Dichromate wie z.B. Kupferhydroxycarbonat, Natriumdichromat, Kaliumdichromat, Kaliumchromat, Kupfersulfat, Kupferchlorid, Kupferborat, Zinkfluorosilikat, Kupferfluorosilikat;

Oxide wie:

Oxide der Metalle Zinn, Kupfer und Zink wie z.B. Tributylzinnoxid, $Cu_2O$, CuO, ZnO;

Oxidationsmittel wie:

Wasserstoffperoxid, Peressigsäure, Kaliumpersulfat;

Dithiocarbamate wie:

Cufraneb, Ferban, Kalium-N-hydroxymethyl-N'-methyl-dithiobarbamat, Na- oder K-dimethyldithiocarbamat, Mancozeb, Maneb, Metam, Metiram, Thiram, Zineb, Ziram;

Nitrile wie:

2,4,5,6-Tetrachlorisophthalodinitril, Dinatrium-cyano-dithioimidocarbamat;

Chinoline wie:

8-Hydroxychinolin und deren Cu-Salze;

sonstige Fungizide und Bakterizide wie:

Bethozaxin, 5-Hydroxy-2(5H)-furanon; 4,5-Benzdithiazolinon, 4,5-Trimethylendithiazolinon, N-(2-p-Chlorbenzoylethyl)-hexaminiumchlorid, 2-Oxo-2-(4-hydroxy-phenyl)acethydroximsäure-chlorid, Tris-N-(cyclohexyldiazeniumdioxy)-aluminium, N-(Cyclohexyldiazeniumdioxy)-tributylzinn bzw. K-Salze, Bis-N-(cyclohexyldiazeniumdioxy)-kupfer, Iprovalicarb, Fenhexamid, Spiroxamine, Carpropamid, Diflumetorin, Quinoxyfen, Famoxadone, Polyoxorim, Acibenzolar-S-methyl, Furametpyr, Thifluzamide, Methalaxyl-M, Benthiavalicarb, Metrafenone, Cyflufenamid, Tiadinil, Teebaumöl, Phenoxyethanol,

Ag, Zn oder Cu-haltige Zeolithe allein oder eingeschlossen in polymere Werkstoffe.

Insektizide:

Abamectin, Acephat, Acetamiprid, Acetoprole, Acrinathrin, Alanycarb, Aldicarb, Aldoxycarb, Aldrin, Allethrin, Alpha-cypermethrin, Amidoflumet, Amitraz, Avermectin, Azadirachtin, Azinphos A, Azinphos M, Azocyclotin,

Bacillus thuringiensis, Barthrin, 4-Bromo-2(4-chlorphenyl)-1-(ethoxymethyl)-5-(trifluoromethyl)-1H-pyrrole-3-carbonitrile, Bendiocarb, Benfuracarb, Bensultap, Betacyfluthrin, Bifenthrin, Bioresmethrin, Bioallethrin, Bistrifluron, Bromophos A, Bromophos M, Bufencarb, Buprofezin, Butathiophos, Butocarboxin, Butoxycarboxim,

Cadusafos, Carbaryl, Carbofuran, Carbophenothion, Carbosulfan, Cartap, Chinomethionat, Cloethocarb, 4-Chlor-2-(2-chlor-2-methylpropyl)-5-[(6-iod-3-pyridinyl)methoxy]-3(2H)- pyridazinone (CAS-RN: 120955-77-3), Chlordane, Chlorethoxyfos, Chlorfenapyr, Chlorfenvinphos, Chlorfluazuron, Chlormephos, N-[(6-Chloro-3-pyridinyl)-methyl]-N'-cyano-N-methyl-ethanimidamide, Chlorpicrin, Chlorpyrifos A, Chlorpyrifos M, Cis-Resmethrin, Clocythrin, Clothiazoben, Cypophenothrin Clofentezin, Coumaphos, Cyanophos, Cycloprothrin, Cyfluthrin, Cyhalothrin, Cyhexatin, Cypermethrin, Cyromazin,

Decamethrin, Deltamethrin, Demeton M, Demeton S, Demeton-S-methyl, Diafenthiuron, Dialiphos, Diazinon, 1,2-Dibenzoyl-1(1,1-dimethyl)-hydrazin, DNOC, Dichlofenthion, Dichlorvos, Dicliphos, Dicrotophos, Difethialone, Diflubenzuron, Dimethoat, 3,5-Dimethylphenyl-methylcarbamat, Dimethyl-(phenyl)-silyl-methyl-3-phenoxybenzylether, Dimethyl-(4-Ethoxyphenyl)-silylmethyl-3-phenoxybenzylether, Dimethylvinphos, Dioxathion, Disulfoton,

Eflusilanate, Emamectin, Empenthrin, Endosulfan, EPN, Esfenvalerat, Ethiofencarb, Ethion, Etofenprox, Etrimphos, Etoxazole, Etobenzanid,

Fenamiphos, Fenazaquin, Fenbutatinoxid, Fenfluthrin, Fenitrothion, Fenobucarb, Fenothiocarb, Fenoxycarb, Fenpropathrin, Fenpyrad, Fenpyroximat, Fensulfothion, Fenthion, Fenvalerate, Fipronil, Flonicamid, Fluacrypyrim, Fluazuron, Flucycloxuron, Flucythrinate, Flufenerim, Flufenoxuron, Flupyrazofos, Flufenzine, Flumethrin Flufenprox, Fluvalinate, Fonophos, Formethanate, Formothion, Fosmethilan Fosthiazat, Fubfenprox, Furathiocarb,

Halofenocid, HCH (CAS RN: 58-89-9), Heptenophos, Hexaflumuron, Hexythiazox, Hydramethylnon, Hydroprene,

Imidacloprid, Imiprothrin, Indoxycarb, Iodfenfos, Iprinomectin, Iprobenfos, Isazophos, Isoamidophos, Isofenphos, Isoprocarb, Isoprothiolane, Isoxathion, Ivermectin, Lama-cyhalothrin, Lufenuron,

Kadedrin,

Lambda-Cyhalothrin, Lufenuron,

Malathion, Mecarbam, Mervinphos, Mesulfenphos, Metaldehyd, Methacrifos, Methamidophos, Methidathion, Methiocarb, Methomyl, Metalcarb, Milbemectin, Monocrotophos, Moxiectin,

Naled, NI 125, Nicotin, Nitenpyram, Noviflumuron,

Omethoat, Oxamyl, Oxydemethon M, Oxydeprofos,

Parathion A, Parathion M, Penfluron, Permethrin, 2-(4-Phenoxyphenoxy)-ethyl-ethylcarbamat, Phenthoat, Phorat, Phosalon, Phosmet, Phosphamidon, Phoxim, Pirimicarb, Pirimiphos M, Pirimiphos A, Prallethrin, Profenophos, Promecarb, Propaphos, Propoxur, Prothiophos, Prothoat, Pymetrozin, Pyrachlophos, Pyridaphenthion, Pyresmethrin, Pyrethrum, Pyridaben, Pyridalyl, Pyrimidifen, Pyriproxifen, Pyrithiobac-natrium

Quinalphos,

Resmethrin, Rotenone,

Salithion, Sebufos, Silafluofen, Spinosad, Spirodiclofen, Spiromesifen, Sulfotep, Sulprofos,

Tau-fluvalinate, Taroils, Tebufenozide, Tebufenpyrad, Tebupirimphos, Teflubenzuron, Tefluthrin, Temephos, Terbam, Terbufos, Tetrachlorvinphos, Tetramethrin, Tetramethacarb, Thiacloprid, Thiafenox, Thiamethoxam, Thiapronil, Thiodicarb, Thiofanox, Thiazophos, Thiocyclam, Thiomethon, Thionazin, Thuringiensin, Tralomethrin, Transfluthrin, Triarathen, Triazophos, Triazamate, Triazuron, Trichlorfon, Triflumuron, Trimethacarb,

Vamidothion, Xylylcarb, Zetamethrin;

Herbizide und Algizide:

Acetochlor, Acifluorfen, Aclonifen, Acrolein, Alachlor, Alloxydim, Ametryn, Amidosulfuron, Amitrole, Ammonium sulfamate, Anilofos, Asulam, Atrazine, Azafenidin, Aziptrotryne, Azimsulfuron,

Benazolin, Benfluralin, Benfuresate, Bensulfuron, Bensulfide, Bentazone, Benzofencap, Benzthiazuron, Bifenox, Bispyribac, Bispyribac-Natrium, Borax, Bromacil, Bromobutide, Bromofenoxim, Bromoxynil, Butachlor, Butamifos, Butralin, Butylate, Bialaphos, Benzoyl-prop, Bromobutide, Butroxydim,

Carbetamide, Carfentrazone-ethyl, Carfenstrole, Chlomethoxyfen, Chloramben, Chlorbromuron, Chlorflurenol, Chloridazon, Chlorimuron, Chlornitrofen, Chloroacetic acid, Chloransulam-methyl, Cinidon-ethyl, Chlorotoluron, Chloroxuron, Chlorpropham, Chlorsulfuron, Chlorthal, Chlorthiamid, Cinmethylin, Cinofulsuron, Clefoxydim, Clethodim, Clomazone, Chlomeprop, Clopyralid, Cyanamide, Cyanazine, Cycloate, Cycloxydim, Chloroxynil, Clodinafop-propargyl, Cumyluron, Clometoxyfen, Cyhalofop, Cyhalofop-butyl, Clopyrasuluron, Cyclosulfamuron,

Diclosulam, Dichlorprop, Dichlorprop-P, Diclofop, Diethatyl, Difenoxuron, Difenzoquat, Diflufenican, Diflufenzopyr, Dimefuron, Dimepiperate, Dimethachlor, Dimethipin, Dinitramine, Dinoseb, Dinoseb Acetate, Dinoterb, Diphenamid, Dipropetryn, Diquat, Dithiopyr, Diuron, DNOC, DSMA, 2,4-D, Daimuron, Dalapon, Dazomet, 2,4-DB, Desmedipham, Desmetryn, Dicamba, Dichlobenil, Dimethamid, Dithiopyr, Dimethametryn,

Eglinazine, Endothal, EPTC, Esprocarb, Ethalfluralin, Ethidimuron, Ethofumesate, Ethobenzanid, Ethoxyfen, Ethametsulfuron, Ethoxysulfuron,

Fenoxaprop, Fenoxaprop-P, Fenuron, Flamprop, Flamprop-M, Flazasulfuron, Fluazifop, Fluazifop-P, Fuenachlor, Fluchloralin, Flufenacet Flumeturon, Fluorocglycofen, Fluoronitrofen, Flupropanate, Flurenol, Fluridone, Flurochloridone, Fluroxypyr, Fomesafen, Fosamine, Fosametine, Flamprop-isopropyl, Flamprop-isopropyl-L, Flufenpyr, Flumiclorac-pentyl, Flumipropyn, Flumioxzim, Flurtamone, Flumioxzim, Flupyrsulfuron-methyl, Fluthiacet-methyl,

Glyphosate, Glufosinate-ammonium

Haloxyfop, Hexazinone,

Imazamethabenz, Isoproturon, Isoxaben, Isoxapyrifop, Imazapyr, Imazaquin, Imazethapyr, Ioxynil, Isopropalin, Imazosulfuron, Imazomox, Isoxaflutole, Imazapic,

Ketospiradox,

Lactofen, Lenacil, Linuron,

MCPA, MCPA-hydrazid, MCPA-thioethyl, MCPB, Mecoprop, Mecoprop-P, Mefenacet, Mefluidide, Mesosulfuron,

Metam, Metamifop, Metamitron, Metazachlor, Methabenzthiazuron, Methazole, Methoroptryne, Methyldymron, Methylisothiocyanate, Metobromuron, Metoxuron, Metribuzin, Metsulfuron, Molinate, Monalide, Monolinuron, MSMA, Metolachlor, Metosulam, Metobenzuron,

Naproanilide, Napropamide, Naptalam, Neburon, Nicosulfuron, Norflurazon, Natriumchlorat,

Oxadiazon, Oxyfluorfen, Oxysulfuron, Orbencarb, Oryzalin, Oxadiargyl,

Propyzamide, Prosulfocarb, Pyrazolate, Pyrazolsulfuron, Pyrazoxyfen, Pyribenzoxim, Pyributicarb, Pyridate, Paraquat, Pebulate, Pendimethalin, Pentachlorophenol, Pentoxazone, Pentanochlor, Petroleum oils, Phenmedipham, Picloram, Piperophos, Pretilachlor, Primisulfuron, Prodiamine, Profoxydim, Prometryn, Propachlor, Propanil, Propaquizafob, Propazine, Propham, Propisochlor, Pyriminobac-methyl, Pelargonsäure, Pyrithiobac, Pyraflufen-ethyl,

Quinmerac, Quinocloamine, Quizalofop, Quizalofop-P, Quinchlorac,

Rimsulfuron

Sethoxydim, Sifuron, Simazine, Simetryn, Sulfosulfuron, Sulfometuron, Sulfentrazone, Sulcotrione, Sulfosate,

Teeröle, TCA, TCA-Natrium, Tebutam, Tebuthiuron, Terbacil, Terbumeton, Terbuthylazine, Terbutryn, Thiazafluoron, Thifensulfuron, Thiobencarb, Thiocarbazil, Tralkoxydim, Triallate, Triasulfuron, Tribenuron, Triclopyr, Tridiphane, Trietazine, Trifluralin, Tycor, Thdiazimin, Thiazopyr, Triflusulfuron,

Vernolate.

Unter technischen Materialien sind im vorliegenden Zusammenhang Holz, Holzwerkstoffe und Holz-Plastik-Verbundstoffe (sogenannte Wood-Plastic Composites WPC), die von Mikroorganismen befallen oder zersetzt werden können, zu verstehen.

Unter Holz wird insbesondere verstanden: Bauholz, Holzbalken, Eisenbahnschwellen, Brückenteile, Bootsstege, Holzfahrzeuge, Kisten, Paletten, Container, Telefonmasten, Holzzäune, Holzverkleidungen, Holzfernster und -türen, Tischlerarbeiten und Holzprodukte, die beim Hausbau oder in der Bautischlerei Verwendung finden.

Unter Holzwerkstoffen wird insbesondere verstanden: Sperrholz, Spanplatten, Faserplatten, OSB-Platten (oriented strand board) oder Verbundplatten.

Unter Holz-Plastik-Verbundstoff wird insbesondere verstanden: thermoplastisch prozessierbare Verbundwerkstoffe bestehend aus Holz, Kunststoff und Additiven.

Besonders bevorzugt ist Holz.

Als Mikroorganismen, die einen Abbau oder eine Veränderung der technischen Materialien bewirken können, seien beispielsweise Bakterien, Pilze, Hefen, Algen und Schleimorganismen genannt. Vorzugsweise wirken die erfindungsgemäßen Mischungen gegen holzzerstörende Basidiomyceten, vorzugsweise Holobasidiomyceten.

Hierbei seien insbesondere Pilze der folgenden Gattungen genannt:

Coniophora, wie Coniophora puetana,

Lentinus, wie Lentinus tigrinus,

Polyporus, wie Polyporus versicolor,

Gloeophyllum, wie Gloeophyllum trabeum,

Poria, wie Poria placenta,

Stereum, wie Stereum sanguinolentum.

Die erfindungsgemäß einzusetzenden Zusammensetzungen wirken darüber hinaus gegen holzverfärbende und Moderfäule verursachende Ascomyceten und zugeordnete Deuteromyceten, wie zum Beispiel
Arten der Gattung Glenospora wie Glenospora graphii,
Arten der Gattung Chaetomium wie Chaetomium globosum,
Arten der Gattung Humicola wie Humicola grisea,

Arten der Gattung Petriella wie Petriella setifera,
Arten der Gattung Trichurus wie Trichurus spiralis,
Arten der Gattung Lecythophora wie Lecythophora mutabilis
Arten der Gattung Sclerophoma wie Sclerophoma pityophila
Arten der Gattung Aureobasidium wie Aureobasidium pullulans

Überraschenderweise wurde nun gefunden, dass durch die erfindungsgemäße Verwendung die Wirkung von Azolen gesteigert und dadurch Wirkungsschwächen verringert werden können, so dass weniger Wirkstoff verwendet werden kann bzw. ein breiteres Spektrum an Schadpilzen erfasst wird.

Die Erfindung betrifft weiterhin Zusammensetzungen, enthaltend

a1) wenigstens ein Azol ausgewählt aus der Gruppe bestehend aus Azaconazol, Bitertanol, Bromuconazol, Cyproconazol, Diclobutrazol, Difenoconazol, Diniconazol, Epoxyconazol, Etaconazol, Fenbuconazol, Fluquinconazol, Flusilazol, Flutriafol, Furconazol, Hexaconazol, Imibenconazol, Ipconazol, Myclobutanil, Metconazol, Penconazol, Propiconazol, Prothioconazol, Simeconazol, Tebuconazol, Tetraconazol, Triticonazol und Uniconazol sowie deren Metallsalze und Säureaddukte;

a2) ggf. ein Azol ausgewählt aus der Gruppe Triadimenol und Triadimefon

b) wenigstens ein Amidoalkylamin der Formel (I), deren Salze und/oder Säureadditionsverbindungen

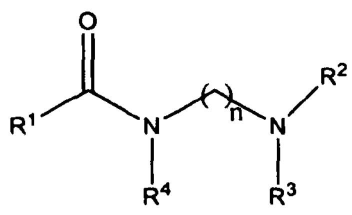
(I)

worin $R^1$ für gegebenenfalls substituiertes $C_1$-$C_{40}$-Alkyl oder $C_2$-$C_{40}$-Alkenyl, $R^2$, $R^3$ und $R^4$ unabhängig voneinander für Wasserstoff oder $C_1$-$C_8$-Alkyl und n für eine ganze Zahl von 1 bis 6 steht.

Bevorzugte erfindungsgemäße Zusammensetzungen enthaltend wenigstens ein Azol ausgewählt aus der Gruppe bestehend aus Tebuconazol, Propiconazol und Cyproconazol und ggf. ein weiteres Azol ausgewählt aus der Gruppe bestehend aus Triadimenol und Triadimefon.

Im Übrigen gelten die Vorzugsbereiche für die erfindungsgemäß verwendeten Zusammensetzungen auch für die erfindungsgemäßen Zusammensetzungen.

Die Erfindung betrifft weiterhin ein Verfahren zur Herstellung der erfindungsgemäßen Zusammensetzung.

Die erfindungsgemäße Zusammensetzung kann beispielsweise durch Vermischen der Einzelkomponenten ggf. mit Streckmitteln, also flüssigen Lösungsmitteln und gegebenenfalls unter Verwendung weiterer Zusatzstoffe hergestellt werden.

Die Erfindung betrifft weiterhin technische Materialien ausgewählt aus der Gruppe Holz, Holzwerkstoff oder Holz-Plastik-Verbundstoff enthaltend

a) wenigstens ein Azol und

b) wenigstens ein Amidoalkylamin der Formel (I), deren Salze und/oder Säureadditionsverbindungen

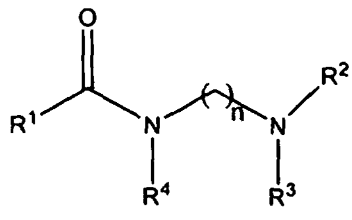
(I)

worin $R^1$ für gegebenenfalls substituiertes $C_2$-$C_{40}$-Alkyl oder $C_2$-$C_{40}$-Alkenyl, $R^2$, $R^3$ und $R^4$ unabhängig voneinander

für Wasserstoff oder $C_1$-$C_8$-Alkyl und n für eine ganze Zahl von 1 bis 6 steht.

Außerdem betrifft die Erfindung ein Verfahren zum Schutz von technischen Materialien ausgewählt aus der Gruppe Holz, Holzwerkstoffe oder Holz-Plastik-Verbundstoffe vor Befall und/oder Zerstörung durch Mikroorganismen, dadurch gekennzeichnet, **dass** man wenigstens eine Zusammensetzung, enthaltend

a) wenigstens ein Azol und

b) wenigstens ein Amidoalkylamin der Formel (I), deren Salze und/oder Säureadditionsverbindungen

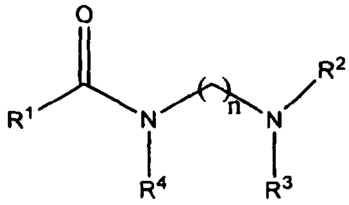

(I)

worin $R^1$ für gegebenenfalls substituiertes $C_2$-$C_{40}$-Alkyl oder $C_2$-$C_{40}$-Alkenyl, $R^2$, $R^3$ und $R^4$ unabhängig voneinander für Wasserstoff oder $C_1$-$C_8$-Alkyl auf den Mikroorganismus oder dessen Lebensraum einwirken lässt.

Wobei dieses Verfahren zur erfindungsgemäßen Verwendung äquivalent anzusehen ist. Im Übrigen gelten auch alle Vorzugsbereiche der Verwendung bzw. der erfindungsgemäßen Zusammensetzung auch für dieses Verfahren.

Bei dem erfindungsgemäßen Verfahren bzw. bei der Verwendung werden die Zusammensetzungen vorzugsweise durch Streichen, Tränken, Besprühen, Imprägnieren oder in sonstiger Weise auf das technische Material aufgetragen.

Bei Holz und Holzwerkstoffen sind bevorzugt großtechnische Imprägnierverfahren, zum Beispiel das Vakuum-, Doppelvakuum-, Vakuumdruck- oder Druckverfahren.

Die vom Holz aufgenommene Menge an Tränklösung hängt vom Verfahren ab. Beim Vakuumdruckverfahren werden vom Holz vorzugsweise 200-700 kg Tränklösung pro $m^3$ Holz aufgenommen, beim Doppelvakuumverfahren vorzugsweise 20-40 kg/$m^3$. Die Imprägnierzeit variiert je nach Verfahren, beim Druckverfahren beträgt sie bspw. 0,5 bis 6 Stunden, beim Doppelvakuumverfahren 3 bis 60 min. Bevorzugt wird bezogen auf den eingesetzten Wirkstoff 10 bis 500 g, vorzugsweise 50 bis 400 g, insbesondere 100 bis 350 g, vorzugsweise 100 bis 250 g Wirkstoff zuzüglich Wirkverstärker und ggf. weiterer Zusätze pro $m^3$ Holz eingesetzt.

Holz-Plastik-Verbundstoffe können bspw. dadurch hergestellt werden, dass man Holzpartikel, ein thermoplastisches Polymer und die Zusammensetzungen unter thermischer Energie vermischt, insbesondere extrudiert oder spritzgießt.

## Beispiele

**Beispiel 1:** Kombinationen von Tebuconazol und Amidoalkylamin gegen den Holzdestruenten Gloeophyllum trabeum

Aus einer Kolonie des Holzdestruenten Gloeophyllum trabeum wurden Mycelstücke ausgestochen und auf einem Malzextrakt-Pepton-haltigen Nähragar bei 26°C inkubiert. Hierbei wurde das Hyphenwachstum mit und ohne Wirkstoff- bzw. Amidoalkylamin-Zusatz verglichen. Als Minimale Hemmkonzentration (MHK) wurde die Konzentration angegeben, welche das radiale Hyphenwachstum völlig unterdrückt (Inkubationszeit: ca. 1 Woche abhängig von dem Pilzwachstum der Vergleichsprobe ohne Wirkstoff).

Als in sämtlichen Beispielen eingesetzte Amidoalkylamine der Formel (I) wurde eine Verbindung der Formel

$$R^1 - CONH - (CH_2)_3 - N(CH_2)_2$$

eingesetzt, wobei

$R^1$ für ein Gemisch verschiedener Fettsäurereste steht und damit die Verbindung der Formel (I) als Mischung folgender Zusammensetzungen eingesetzt wurde.

5 - 10 Gew.% (I) mit $R^1$=Alkylrest der Octansäure

5 - 9 Gew.% (I) mit $R^1$=Alkylrest der Decansäure

41 - 53 Gew.% mit $R^1$=Alkylrest der Dodecansäure

16 - 21 Gew.% mit $R^1$=Alkylrest der Tetradecansäure

8 - 12 Gew.% (I) mit $R^1$=Alkylrest der Hexadecansäure

5 - 10 Gew.% (I) mit $R^1$=Alkenylrest der Ölsäure.

Diese Amidoalkylaminmischung (im folgenden Additiv I) wurde in 80%-iger Form des handelsüblichen Produktes Adsee® C80/W der Firma Akzo Nobel eingesetzt, das als Rest Wasser und Propylenglykol enthält.
Nach der von Kull et al. (F.C. Kull, P.C. Eismann, H.D. Sylvestrowicz, R.L. Mayer, Applied Microbiology 1961, 9, 538-541) beschriebenen Methode wurde der Synergismus ermittelt. Dabei gelten folgende Beziehungen:

$$\frac{Q_A}{Q_a} + \frac{Q_B}{Q_b} = X$$

X = 1 bedeutet Additivität
X > 1 bedeutet Antagonismus
X < 1 bedeutet Synergismus
$Q_a$ = Konzentration von Substanz A, welche die MHK darstellt
$Q_b$ = Konzentration von Substanz B, welche die MHK darstellt
$Q_A$ = Konzentration von Substanz A in der Konzentration von A/B, die das Mikrobenwachstum unterbindet
$Q_B$ = Konzentration von Substanz B in der Konzentration von A/B, die das Mikrobenwachstum unterbindet

<u>Ergebnisse:</u>

| | MHK-Wert gegen Gloephyllum trabeum (ppm) | Synergistischer Wert X |
|---|---|---|
| Tebuconazol | 0,5 | - |
| Tebuconazol / Additiv 1 (1 : 0,8) | 0,5 | 0,56 |
| Tebuconazol / Additiv 1 (1 : 3,2) | 1,0 | 0,51 |
| Tebuconazol / Additiv 1 (1 : 7,2) | 2,0 | 0,51 |
| Additiv 1 | > 30[1)] | - |
| [1)] Bis 30 ppm konnte keine eigene Wirkung festgestellt werden. | | |

Tebuconazol und Additiv 1 zeigen im Fall des Holzdestruenten Gloeophyllum trabeum in verschiedenen Mischungsverhältnissen einen ausgeprägten Synergismus.

**Beispiel 2:** Kombination von Triadimefon und Amidoalkylamin gegen den Holzdestruenten Poria placenta

Aus einer Kolonie des Holzdestruenten Poria placenta wurden Mycelstücke ausgestochen und auf einem Malzextrakt-Pepton-haltigen Nähragar bei 26°C inkubiert. Hierbei wurde das Hyphenwachstum mit und ohne Wirkstoff- bzw. Additiv-Zusatz verglichen. Als Minimale Hemmkonzentration (MHK) wurde die Konzentration angegeben, welche das radiale Hyphenwachstum völlig unterdrückt.

<u>Ergebnisse:</u>

| | MHK-Wert gegen Poria placenta (ppm) | Synergistischer Wert X |
|---|---|---|
| Triadimefon | 3,0 | - |
| Triadimefon / Additiv 1 (1 : 0,8) | 2,0 | 0,40 |
| Additiv 1 | > 30[1)] | - |
| [1)] Bis 30 ppm konnte keine eigene Wirkung festgestellt werden. | | |

Triadimefon und Additiv 1 zeigen im Fall des Holzdestruenten Poria placenta eine synergistische Wirkung.

**Beispiel 3: Kombination Propiconazol und Amidoalkylamin gegen den Holzdestruenten Poria placenta**

Aus einer Kolonie des Holzdestruenten Poria placenta wurden Mycelstücke ausgestochen und auf einem Malzextrakt-Pepton-haltigen Nähragar bei 26°C inkubiert. Hierbei wurde das Hyphenwachstum mit und ohne Wirkstoff- bzw. Additiv-Zusatz verglichen. Als Minimale Hemmkonzentration (MHK) wurde die Konzentration angegeben, welche das radiale Hyphenwachstum völlig unterdrückt.

Ergebnisse:

| | MHK-Wert gegen Poria placenta (ppm) | Synergistischer Wert X |
|---|---|---|
| Propiconazol | 0,5 | - |
| Propiconazol / Additiv 1 (1 : 0,8) | 0,7 | 0,79 |
| Additiv 1 | > 30[1)] | - |
| [1)] Bis 30 ppm konnte keine eigene Wirkung festgestellt werden. | | |

Propiconazol und Additiv 1 zeigen im Fall des Holzdestruenten Poria placenta eine synergistische Wirkung.

**Beispiel 4: (Formulierungen und Wirksamkeitstest)**

Formulierung a) Tebuconazol formuliert als in Wasser emulgierbares Konzentrat (EC), enthaltend:
2,5 Gew.-% Tebuconazol, 30 Gew.-% Ricinusölethoxylat und 67,5% 2,2,4-Trimethyl-1,3-pentandiolmono(2-methylpropionat) (Texanol®),
**[0069]** Formulierung b) Tebuconazol + Additiv 1 formuliert als in Wasser emulgierbares Konzentrat (EC), enthaltend:
2,5 Gew.-% Tebuconazol, 10 Gew.-% Additiv 1 (80%-ig in Wasser/ Propylenglykol), 30% Ricinusölethoxylat und 57,5 Gew.-% 2,2,4-Trimethyl-1,3-pentandiolmono(2-methylpropionat) (Texanol®).
Die Formulierungen a) und b) wurden jeweils in einem Test gegen holzzerstörende Pilze in Anlehnung an den EN113-Normtest auf ihre Wirksamkeit geprüft. Im Unterschied zum Normtest wurden kleinere Hölzer verwendet und die Hölzer wurden dem Angriff der Pilze eine kürzere Zeit (8 Wochen) ausgesetzt.
Dazu wurden getrocknete Prüfkörper (25x15x4 mm) aus Kiefer (Pinus sylvestris) jeweils mit wässrigen Verdünnungen der Formulierungen a) und b) vakuumgetränkt. Ausgehend von der Konzentration von Tebuconazol in der Tränklösung und der Aufnahme der Tränklösung im Prüfkörper wurde die vom Prüfkörper aufgenommene Wirkstoffmenge (Retention) berechnet. Die Prüfkörper wurden getrocknet und anschließend gewogen. Um eine verfälschende Fremdverkeimung vorzubeugen, wurden die Prüfkörper mit γ-Strahlen sterilisiert.
Die Prüfkörper wurden in Kontakt mit dem Holzdestruenten Poria placenta gebracht und 8 Wochen gelagert. Anschließend wurden die Prüfhölzer gereinigt, getrocknet und gewogen. Daraus wurde der Masseverlust berechnet. Für jede Retention wurde der Mittelwert von 6 Prüfkörpern ermittelt.

Tabelle 1:

| Nr. | Retention Tebuconazol [g/m$^3$] | Retention Additiv 1 [g/m$^3$] | Masseverlust [%] |
|---|---|---|---|
| 1 (unbehandelte Prüfkörper) | 0 | 0 | 23 |

(fortgesetzt)

| Nr. | Retention Tebuconazol [g/m$^3$] | Retention Additiv 1 [g/m$^3$] | Masseverlust [%] |
|---|---|---|---|
| 2 (Prüfkörper behandelt mit Emulsion aus Formulierung a) | 44 | 0 | 16 |
| 3 (Prüfkörper) behandelt mit Emulsion aus Formulierung b) | 42 | 134,4 | 1 |
| 4 (Prüfkörper) behandelt mit Emulsion aus Formulierung a) | 75 | 0 | 9 |
| 5 (Prüfkörper) behandelt mit Emulsion aus Formulierung b) | 76 | 243,2 | 0 |

Der Test in Anlehnung an EN113 zeigt, dass durch die Verwendung des Additiv 1 die Wirksamkeit von Tebuconazol erhöht wird. Bei gleicher Retention (d.h. die vom Holz aufgenommene

Wirkstoffmenge) von Tebuconazol ist der Masseverlust bei Verwendung des Additiv 1 kleiner als ohne.

**Beispiel 5: Formulierungen und Wirksamkeitstest**

Formulierung c) Triadimefon formuliert als in Wasser emulgierbares Konzentrat (EC), enthaltend: 2,5 Gew.-% Triadimefon, 30 Gew.-% Ricinusölethoxylat und 67,5% 2,2,4-Trimethyl-1,3-pentandiolmono(2-methylpropionat) (Texanol®),

Formulierung d) Triadimefon + Additiv 1 formuliert als in Wasser emulgierbares Konzentrat (EC), enthaltend:

2,5 Gew.-% Triadimefon, 10 Gew.-% Additiv 1 (80%-ig in Wasser/ Propylenglykol), 30% Ricinusölethoxylat und 57,5 Gew.-% 2,2,4-Trimethyl-1,3-pentandiolmono(2-methylpropionat) (Texanol®).

Die Formulierungen c) und d) wurden wie in Beispiel 4 beschrieben jeweils in einem Test gegen holzzerstörende Pilze in Anlehnung an den EN113-Normtest auf ihre Wirksamkeit geprüft.

Die Prüfkörper wurden in Kontakt mit dem Holzdestruenten Coniophora puteana gebracht und 8 Wochen gelagert. Die Auswertung erfolgte wie in Beispiel 4 beschrieben.

Tabelle 2:

| Nr. | Retention Triadimefon [g/m$^3$] | Retention Additiv 1 [g/m$^3$] | Masseverlust [%] |
|---|---|---|---|
| 1 (unbehandelte Prüfkörper) | 0 | 0 | 32 |
| 2 (Prüfkörper behandelt mit Emulsion aus Formulierung c) | 215 | 0 | 30 |
| 3 (Prüfkörper) behandelt mit Emulsion aus Formulierung d) | 217 | 694 | 22 |
| 4 (Prüfkörper behandelt mit Emulsion aus Formulierung c) | 325 | 0 | 31 |
| 5 (Prüfkörper behandelt mit Emulsion aus Formulierung d) | 321 | 1027 | 8 |

Der Test in Anlehnung an EN113 zeigt, dass durch die Verwendung des Additiv 1 die Wirksamkeit von Triadimefon erhöht wird. Bei gleicher Retention (d.h. die vom Holz aufgenommene Wirkstoffmenge) von Triadimefon ist der Masseverlust bei Verwendung des Additiv 1 kleiner als ohne.

**Patentansprüche**

1. Verwendung von Zusammensetzungen, enthaltend

a) wenigstens ein Azol ausgewählt aus der Gruppe bestehend aus Azaconazol, Bitertanol, Bromuconazol,

Cyproconazol, Diclobutrazol, Difenoconazol, Diniconazol, Epoxyconazol, Etaconazol, Fenbuconazol, Fluquinconazol, Flusilazole, Flutriafol, Furconazol, Hexaconazol, Imibenconazol, Ipconazol, Myclobutanil, Metconazol, Penconazol, Propiconazol, Prothioconazol, Simeconazol, Tebuconazol, Tetraconazol, Triadimefon, Triadimenol, Triticonazol und Uniconazol sowie deren Metallsalze und Säureaddukte und

b) wenigstens ein Amidoalkylamin der Formel (I), deren Salze und/oder Säureadditionsverbindungen

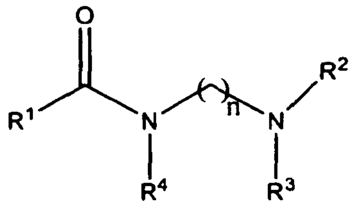

(I)

worin R' für gegebenenfalls substituiertes $C_1$-$C_{40}$-Alkyl oder $C_2$-$C_{40}$-Alkenyl, $R^2$, $R^3$ und $R^4$ unabhängig voneinander für Wasserstoff oder $C_1$-$C_8$-Alkyl und n für eine ganze Zahl von 1 bis 6 steht zum Schutz von Holz, Holzwerkstoff oder Holz-Plastik-Verbundstoff vor Befall und/oder Zerstörung durch Mikroorganismen.

**2.** Verwendung gemäß Anspruch 1, **dadurch gekennzeichnet, dass** die Zusammensetzung wenigstens ein Azol ausgewählt aus der Gruppe Tebuconazol, Propiconazol und Cyproconazol enthält und ggf. ein weiteres Azol ausgewählt aus der Gruppe Triadimenol und Triadimefon enthält.

**3.** Verwendung gemäß Anspruch 1, **dadurch gekennzeichnet, dass** die Zusammensetzung wenigstens eine Verbindung der Formel (I), deren Salze und/oder Säureadditionsprodukte enthält, worin
$R^1$ für $C_2$-$C_{36}$-Alkyl oder $C_2$-$C_{36}$-Alkenyl, $R^2$, $R^3$ und $R^4$ unabhängig voneinander für Wasserstoff oder $C_1$-$C_4$-Alkyl und n für eine Zahl von 1 bis 4 steht.

**4.** Verwendung gemäß Anspruch 1, **dadurch gekennzeichnet, dass** die Zusammensetzung wenigstens eine Verbindung der Formel (I), deren Salze und/oder Säureadditionsprodukte enthält, worin
$R^1$ für $C_5$-$C_{19}$-Alkyl oder $C_5$-$C_{19}$-Alkenyl steht,
$R^2$ und $R^3$ jeweils für Methyl stehen,
$R^4$ Wasserstoff bedeutet und
n für 3 steht.

**5.** Verwendung gemäß Anspruch 1, **dadurch gekennzeichnet, dass** die Zusammensetzung weniger als 0,01 mol, insbesondere weniger als 0,001 mol bezogen auf die Verbindung der Formel (I) an Chelatisierungsmittel enthält.

**6.** Verwendung gemäß Anspruch 1 zum Schutz von Holz, Holzwerkstoff oder Holz-Plastik-Verbundstoff vor holzzerstörenden Basidiomyceten, insbesondere Holobasidiomyceten.

**7.** Zusammensetzung enthaltend

a1) wenigstens ein Azol ausgewählt aus der Gruppe bestehend aus Azaconazol, Bitertanol, Bromuconazol, Cyproconazol, Diclobutrazol, Difenoconazol, Diniconazole, Epoxyconazol, Etaconazol, Fenbuconazol, Fluquinconazol, Flusilazol, Flutriafol, Furconazol, Hexaconazol, Imibenconazol, Ipconazol, Myclobutanil, Metconazol, Penconazol, Propiconazol, Prothioconazol, Simeconazol, Tebuconazol, Tetraconazol, Triticonazol und Uniconazol sowie deren Metallsalze und Säureaddukte;
a2) ggf. ein Azol ausgewählt aus der Gruppe Triadimenol und Triadimefon
b) wenigstens ein Amidoalkylamin der Formel (I), deren Salze und/oder Säureadditionsverbindungen

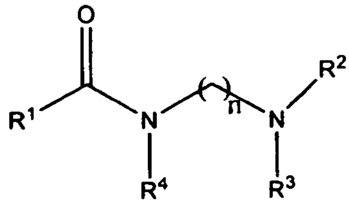

(I)

worin $R^1$ für gegebenenfalls substituiertes $C_1$-$C_{40}$-Alkyl oder $C_2$-$C_{40}$-Alkenyl, $R^2$, $R^3$ und $R^4$ unabhängig voneinander für Wasserstoff oder $C_1$-$C_8$-Alkyl und n für eine ganze Zahl von 1 und 6 steht.

**8.** Zusammensetzung gemäß Anspruch 7 enthaltend wenigstens ein Azol ausgewählt aus der Gruppe Tebuconazol, Propiconazol und Cyproconazol enthält und ggf. ein weiteres Azol ausgewählt aus der Gruppe Triadimenol und Triadimefon.

**9.** Technische Materialien ausgewählt aus der Gruppe Holz, Holzwerkstoff oder Holz-Plastik-Verbundstoff enthaltend

a) wenigstens ein Azol ausgewählt aus der Gruppe bestehend aus Azaconazol, Bitertanol, Bromuconazol, Cyproconazol, Diclobutrazol, Difenoconazol, Diniconazole, Epoxyconazol, Etaconazol, Fenbuconazol, Fluquinconazol, Flusilazol, Flutriafol, Furconazol, Hexaconazol, Imibenconazol, Ipconazol, Myclobutanil, Metconazol, Penconazol, Propiconazol, Prothioconazol, Simeconazol, Tebuconazol, Tetraconazol, Triticonazol und Uniconazol sowie deren Metallsalze und Säureaddukte und
b) wenigstens ein Amidoalkylamin der Formel (I), deren Salze und/oder Säureadditionsverbindungen

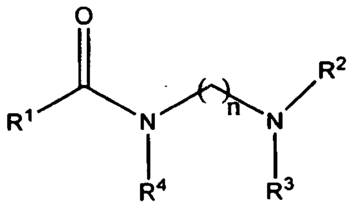

(I)

worin $R^1$ für gegebenenfalls substituiertes $C_1$-$C_{40}$-Alkyl oder $C_2$-$C_{40}$-Alkenyl, $R^2$, $R^3$ und $R^4$ unabhängig voneinander für Wasserstoff oder $C_1$-$C_8$-Alkyl und n für eine ganze Zahl von 1 bis 6 steht.

**10.** Verfahren zum Schutz von technischen Materialien ausgewählt aus der Gruppe Holz, Holzwerkstoff oder Holz-Plastik-Verbundstoff vor Befall und/oder Zerstörung durch Mikroorganismen, **dadurch gekennzeichnet, dass** man wenigstens eine Zusammensetzung, enthaltend

a) wenigstens ein Azol ausgewählt aus der Gruppe bestehend aus Azaconazol, Bitertanol, Bromuconazol, Cyproconazol, Diclobutrazol, Difenoconazol, Diniconazole, Epoxyconazol, Etaconazol, Fenbuconazol, Fluquinconazol, Flusilazol, Flutriafol, Furconazol, Hexaconazol, Imibenconazol, Ipconazol, Myclobutanil, Metconazol, Penconazol, Propiconazol, Prothioconazol, Simeconazol, Tebuconazol, Tetraconazol, Triticonazol und Uniconazol sowie deren Metallsalze und Säureaddukte und
b) wenigstens ein Amidoalkylamin der Formel (I), deren Salze und/oder Säureadditionsverbindungen

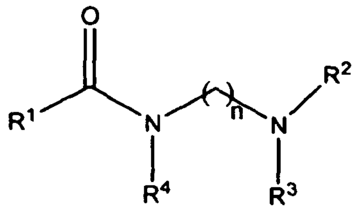

(I)

worin $R^1$ für gegebenenfalls substituiertes $C_1$-$C_{40}$-Alkyl oder $C_2$-$C_{40}$-Alkenyl, $R^2$, $R^3$ und $R^4$ unabhängig voneinander für Wasserstoff oder $C_1$-$C_8$-Alkyl und n für eine Zahl von 1 bis 6 steht,
auf den Mikroorganismus oder dessen Lebensraum einwirken lässt.

## Claims

1. Use of compositions comprising

a) at least one azole selected from the group consisting of azaconazole, bitertanol, bromuconazole, cyproconazole, diclobutrazol, difenoconazole, diniconazole, epoxyconazole, etaconazole, fenbuconazole, fluquinconazole, flusilazole, flutriafol, furconazole, hexaconazole, imibenconazole, ipconazole, myclobutanil, metconazole, penconazole, propiconazole, prothioconazole, simeconazole, tebuconazole, tetraconazole, triadimefon, triadimenol, triticonazole and uniconazole and their metal salts and acid adducts and
b) at least one amidoalkylamine of the formula (I), a salt and/or acid addition compound thereof,

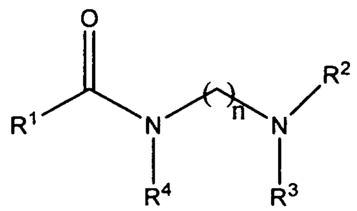

(I)

in which $R^1$ represents optionally substituted $C_1$-$C_{40}$-alkyl or $C_2$-$C_{40}$-alkenyl, $R^2$, $R^3$ and $R^4$ independently of one another represent hydrogen or $C_1$-$C_8$-alkyl and n represents an integer from 1 to 6 for protecting wood, timber products or wood/plastic composites against attack and/or destruction by microorganisms.

2. Use according to Claim 1, **characterized in that** the composition comprises at least one azole selected from the group consisting of tebuconazole, propiconazole and cyproconazole and optionally a further azole selected from the group consisting of triadimenol and triadimefon.

3. Use according to Claim 1, **characterized in that** the composition comprises at least one compound of the formula (I), a salt and/or acid addition product thereof, in which
$R^1$ represents $C_2$-$C_{36}$-alkyl or $C_2$-$C_{36}$-alkenyl, $R^2$, $R^3$ and $R^4$ independently of one another represent hydrogen or $C_1$-$C_4$-alkyl and n represents a number from 1 to 4.

4. Use according to Claim 1, **characterized in that** the composition comprises at least one compound of the formula (I), a salt and/or acid addition product thereof, in which
$R^1$ represents $C_5$-$C_{19}$-alkyl or $C_5$-$C_{19}$-alkenyl,
$R^2$ and $R^3$ each represent methyl,
$R^4$ represents hydrogen and
n represents 3.

5. Use according to Claim 1, **characterized in that** the composition comprises less than 0.01 mol, in particular less than 0.001 mol, based on the compound of the formula (I), of chelating agent.

6. Use according to Claim 1 for protecting wood, timber products or wood/plastic composites against wood-destroying basidiomycetes, in particular holobasidiomycetes.

7. Composition comprising

a1) at least one azole selected from the group consisting of azaconazole, bitertanol, bromuconazole, cyproconazole, diclobutrazol, difenoconazole, diniconazole, epoxyconazole, etaconazole, fenbuconazole, fluquinconazole, flusilazole, flutriafol, furconazole, hexaconazole, imibenconazole, ipconazole, myclobutanil, metconazole, penconazole, propiconazole, prothioconazole, simeconazole, tebuconazole, tetraconazole, triticonazole and uniconazole and their metal salts and acid adducts;
a2) optionally one azole selected from the group consisting of triadimenol and triadimefon;
b) at least one amidoalkylamine of the formula (I), a salt and/or acid addition compound thereof,

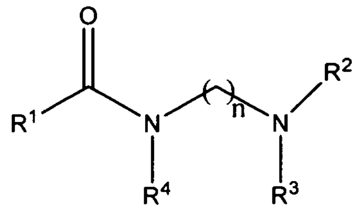
(I)

in which $R^1$ represents optionally substituted $C_1$-$C_{40}$-alkyl or $C_2$-$C_{40}$-alkenyl, $R^2$, $R^3$ and $R^4$ independently of one another represent hydrogen or $C_1$-$C_8$-alkyl and n represents an integer from 1 and 6.

8. Composition according to Claim 7, comprising at least one azole selected from the group consisting of tebuconazole, propiconazole and cyproconazole and optionally one further azole selected from the group consisting of triadimenol and triadimefon.

9. Industrial materials selected from the group consisting of wood, timber products and wood/plastic composites, comprising

a) at least one azole selected from the group consisting of azaconazole, bitertanol, bromuconazole, cyproconazole, diclobutrazol, difenoconazole, diniconazole, epoxyconazole, etaconazole, fenbuconazole, fluquinconazole, flusilazole, flutriafol, furconazole, hexaconazole, imibenconazole, ipconazole, myclobutanil, metconazole, penconazole, propiconazole, prothioconazole, simeconazole, tebuconazole, tetraconazole, triticonazole and uniconazole and their metal salts and acid adducts and
b) at least one amidoalkylamine of the formula (I), a salt and/or acid addition compound thereof,

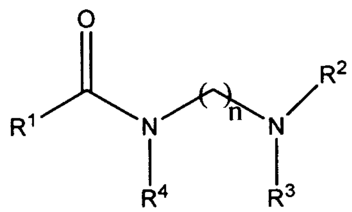
(I)

in which $R^1$ represents optionally substituted $C_1$-$C_{40}$-alkyl or $C_2$-$C_{40}$-alkenyl, $R^2$, $R^3$ and $R^4$ independently of one another represent hydrogen or $C_1$-$C_8$-alkyl and n represents an integer from 1 to 6.

10. Method for protecting industrial materials selected from the group consisting of wood, timber products and wood/plastic composites against attack and/or destruction by microorganisms, **characterized in that** at least one composition comprising

a) at least one azole selected from the group consisting of azaconazole, bitertanol, bromuconazole, cyproconazole, diclobutrazol, difenoconazole, diniconazole, epoxyconazole,
etaconazole, fenbuconazole, fluquinconazole, flusilazole, flutriafol, furconazole, hexaconazole, imibenconazole, ipconazole, myclobutanil, metconazole, penconazole, propiconazole, prothioconazole, simeconazole, tebuconazole, tetraconazole, triticonazole and uniconazole and their metal salts and acid adducts and
b) at least one amidoalkylamine of the formula (I), a salt and/or acid addition compound thereof,

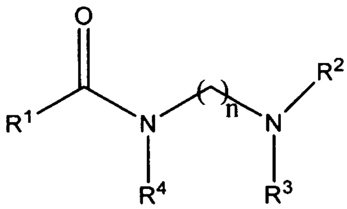
(I)

in which $R^1$ represents optionally substituted $C_1$-$C_{40}$-alkyl or $C_2$-$C_{90}$-alkenyl, $R^2$, $R^3$ and $R^4$ independently of one another represent hydrogen or $C_1$-$C_8$-alkyl and n represents an integer from 1 to 6,
is allowed to act on the microorganism or its habitat.

**Revendications**

1. Utilisation de compositions contenant

a) au moins un azole choisi dans le groupe constitué par l'azaconazole, le bitertanol, le bromuconazole, le cyproconazole, le diclobutrazole, le difénoconazole, le diniconazole, l'époxyconazole, l'étaconazole, le fenbuconazole, le fluquinconazole, le flusilazole, le flutriafol, le furconazole, l'hexaconazole, l'imibenconazole, l'ipconazole, le myclobutanil, le metconazole, le penconazole, le propiconazole, le prothioconazole, le siméconazole, le tébuconazole, le tétraconazole, le triadiméfon, le triadiménol, le triticonazole et l'uniconazole ainsi que leurs sels métalliques et adduits avec des acides et
b) au moins une amidoalkylamine de formule (I), ses sels et/ou composés d'addition avec des acides

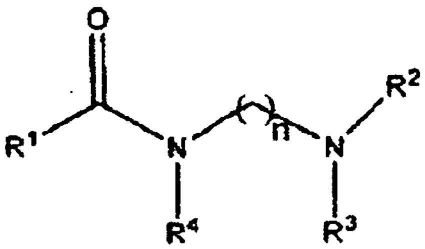
**(I)**

formule dans laquelle $R^1$ représente un groupe alkyle en $C_1$-$C_{40}$ ou alcényle en $C_2$-$C_{40}$ éventuellement substitué, $R^2$, $R^3$ et $R^4$ représentent chacun indépendamment un atome d'hydrogène ou un groupe alkyle en $C_1$-$C_8$ et n représente un nombre entier valant de 1 à 6, pour la protection du bois, de matériau à base de bois ou de matériau composite bois-plastique contre l'attaque et/ou la destruction par des micro-organismes.

2. Utilisation selon la revendication 1, **caractérisée en ce que** la composition contient au moins un azole choisi dans le groupe constitué par le tébuconazole, le propiconazole et le cyproconazole et éventuellement un autre azole choisi dans le groupe constitué par le triadiménol et le triadiméfon.

3. Utilisation selon la revendication 1, **caractérisée en ce que** la composition contient au moins un composé de formule (I), ses sels et/ou produits d'addition avec des acides, formule dans laquelle
$R^1$ représente un groupe alkyle en $C_2$-$C_{36}$ ou alcényle en $C_2$-$C_{36}$, $R^2$, $R^3$ et $R^4$ représentent chacun indépendamment un atome d'hydrogène ou un groupe alkyle en $C_1$-$C_4$ et n représente un nombre valant de 1 à 4.

4. Utilisation selon la revendication 1, **caractérisée en ce que** la composition contient au moins un composé de formule (I), ses sels et/ou produits d'addition avec des acides, formule dans laquelle
$R^1$ représente un groupe alkyle en $C_5$-$C_{19}$ ou alcényle en $C_5$-$C_{19}$,
$R^2$ et $R^3$ représentent chacun le groupe méthyle,
$R^4$ représente un atome d'hydrogène et
n représente 3.

5. Utilisation selon la revendication 1, **caractérisée en ce que** la composition contient moins de 0,01 mole, en particulier moins de 0,001 mole, par rapport au composé de formule (I), d'agent chélateur.

6. Utilisation selon la revendication 1, pour la protection du bois, de matériau à base de bois ou de matériau composite bois-plastique contre des basidiomycètes, en particulier des holobasidiomycètes, xylophages.

7. Composition contenant

a1) au moins un azole choisi dans le groupe constitué par l'azaconazole, le bitertanol, le bromuconazole, le cyproconazole, le diclobutrazole, le difénoconazole, le diniconazole, l'époxyconazole, l'étaconazole, le fenbuconazole, le fluquinconazole, le flusilazole, le flutriafol, le furconazole, l'hexaconazole, l'imibenconazole, l'ipconazole, le myclobutanil, le metconazole, le penconazole, le propiconazole, le prothioconazole, le siméconazole, le tébuconazole, le tétraconazole, le triticonazole et l'uniconazole ainsi que leurs sels métalliques et adduits avec des acides ;
a2) éventuellement un azole choisi dans le groupe constitué par le triadiménol et le triadiméfon
b) au moins une amidoalkylamine de formule (I), ses sels et/ou composés d'addition avec des acides

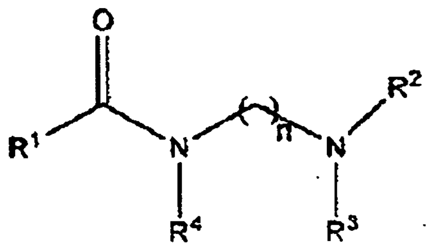

(I)

formule dans laquelle $R^1$ représente un groupe alkyle en $C_1$-$C_{40}$ ou alcényle en $C_2$-$C_{40}$ éventuellement substitué, $R^2$, $R^3$ et $R^4$ représentent chacun indépendamment un atome d'hydrogène ou un groupe alkyle en $C_1$-$C_8$ et n représente un nombre entier valant de 1 à 6.

8. Composition selon la revendication 7, contenant au moins un azole choisi dans le groupe constitué par le tébuconazole, le propiconazole et le cyproconazole et éventuellement un autre azole choisi dans le groupe constitué par le triadiménol et le triadiméfon.

9. Matériaux industriels choisis dans le groupe constitué par le bois, un matériau à base de bois ou un matériau composite bois-plastique, contenant

a) au moins un azole choisi dans le groupe constitué par l'azaconazole, le bitertanol, le bromuconazole, le cyproconazole, le diclobutrazole, le difénoconazole, le diniconazole, l'époxyconazole, l'étaconazole, le fenbuconazole, le fluquinconazole, le flusilazole, le flutriafol, le furconazole, l'hexaconazole, l'imibenconazole, l'ipconazole, le myclobutanil, le metconazole, le penconazole, le propiconazole, le prothioconazole, le siméconazole, le tébuconazole, le tétraconazole, le triticonazole et l'uniconazole ainsi que leurs sels métalliques et adduits avec des acides et
b) au moins une amidoalkylamine de formule (I), ses sels et/ou composés d'addition avec des acides

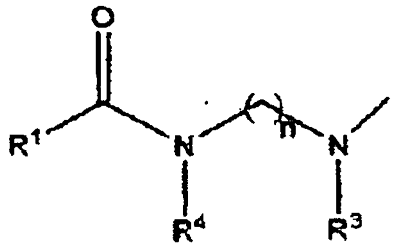

(I)

formule dans laquelle $R^1$ représente un groupe alkyle en $C_1$-$C_{40}$ ou alcényle en $C_2$-$C_{40}$ éventuellement substitué, $R^2$, $R^3$ et $R^4$ représentent chacun indépendamment un atome d'hydrogène ou un groupe alkyle en $C_1$-$C_8$ et n représente un nombre entier valant de 1 à 6.

**10.** Procédé pour la protection de matériaux industriels choisis dans le groupe constitué par le bois, un matériau à base de bois ou un matériau composite bois-plastique, contre l'attaque et/ou la destruction par des micro-organismes, **caractérise en ce qu'**on fait agir sur les micro-organismes ou leur habitat au moins une composition contenant

a) au moins un azole choisi dans le groupe constitué par l'azaconazole, le bitertanol, le bromuconazole, le cyproconazole, le diclobutrazole, le difénoconazole, le diniconazole, l'époxyconazole, l'étaconazole, le fenbuconazole, le fluquinconazole, le flusilazole, le flutriafol, le furconazole, l'hexaconazole, l'imibenconazole, l'ipconazole, le myclobutanil, le metconazole, le penconazole, le propiconazole, le prothioconazole, le siméconazole, le tébuconazole, le tétraconazole, le triticonazole et l'uniconazole ainsi que leurs sels métalliques et adduits avec des acides et
b) au moins une amidoalkylamine de formule (I), ses
sels et/ou composés d'addition avec des acides

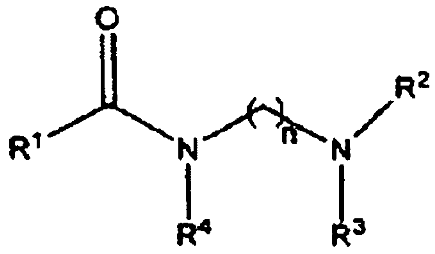

(I)

formule dans laquelle $R^1$ représente un groupe alkyle en $C_1$-$C_{40}$ ou alcényle en $C_2$-$C_{40}$ éventuellement substitué, $R^2$, $R^3$ et $R^4$ représentent chacun indépendamment un atome d'hydrogène ou un groupe alkyle en $C_1$-$C_8$ et n représente un nombre entier valant de 1 à 6.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 19953274 A
- DE 19953274
- WO 9302557 A
- US 6231651 B
- WO 00713 A
- WO 951781 U
- WO 0195720 A


### In der Beschreibung aufgeführte Nicht-Patentliteratur


- **F.C. Kull ; P.C. Eismann ; H.D. Sylvestrowicz ; R.L. Mayer.** *Applied Microbiology,* 1961, vol. 9, 538-541